# EUROPÄISCHE PATENTSCHRIFT

(11) **EP 2 365 866 B1**
(45) Veröffentlichungstag und Bekanntmachung des Hinweises auf die Patenterteilung: **02.01.2013**
(21) Anmeldenummer: 09771298.8
(22) Anmeldetag: 26.11.2009
(51) Int. Cl.: B01D 53/60

(54) **VERFAHREN ZUR ENTFERNUNG VON VERUNREINIGUNGEN AUS SAUERSTOFFHALTIGEN GASSTRÖMEN**
METHOD FOR REMOVING IMPURITIES FROM GAS FLOWS COMPRISING OXYGEN
PROCÉDÉ D'ÉLIMINATION D'IMPURETÉS DE COURANTS GAZEUX CONTENANT DE L'OXYGÈNE

(30) Priorität: 16.12.2008 DE 102008062496
(43) Veröffentlichungstag der Anmeldung: 21.09.2011
(73) Patentinhaber: Linde AG, 80331 München (DE)
(72) Erfinder: SCHÖDEL, Nicole, 81477 München (DE); ZANDER, Hans-Jörg, 81479München (DE); WINKLER, Florian, 80339 München (DE); RITTER, Roland, 01217 Dresden (DE); STOFFREGEN, Torsten, 01217 Dresden (DE)
(86) Internationale Anmeldenummer: PCT/EP2009/008445
(87) Internationale Veröffentlichungsnummer: WO 2010/075917

(56) Entgegenhaltungen:
- EP-A1- 1 790 614

## Beschreibung

Die Erfindung betrifft ein Verfahren zur Entfernung von zumindest einem Teil mindestens einer Verunreinigung, die insbesondere eine chemische Verbindung aus der Gruppe der Schwefeloxide (SOₓ) und/oder Stickoxide (NOₓ) umfasst, aus einem Sauerstoff enthaltenden Gasstrom durch Auswaschen mit mindestens einem Waschmittel.

Zur Sicherstellung der Energieversorgung einer Volkswirtschaft sind Kraftwerke, also industrietechnische Anlagen zur Bereitstellung von insbesondere elektrischer und teilweise zusätzlicher thermischer Leistung, unverzichtbar. In solchen Kraftwerken wird Primärenergie eingesetzt, die nach entsprechender Umwandlung als Nutzenergie verfügbar gemacht wird. Dabei fallen in der Regel Gasströme an, die nicht ohne weitere Reinigungsschritte an die Umwelt abgegeben werden können. Insbesondere in kalorischen Kraftwerken, bei denen fossile Brennstoffe, z.B. Kohle, Erdöl oder Erdgas, verbrannt werden, fallen üblicherweise als Rauchgase bezeichnete Abgasströme an, die umweltschädliche Bestandteile enthalten. Problematisch ist dabei besonders die Bildung von Schwefel- und Stickoxiden (SOₓ und NOₓ) bei der Verbrennung der fossilen Rohstoffe. Die Schwefeloxide - insbesondere SO₂ - werden überwiegend aus dem im Brennstoff enthaltenen Schwefel durch Oxidation gebildet. Die Stickoxide können auf unterschiedlichen Wegen, beispielsweise durch Oxidation des in der Verbrennungsluft und/oder in den Brennstoffen enthaltenen Stickstoffs, entstehen. Bisher wird versucht, die Bildung von Stickoxiden durch Primärmaßnahmen zu verringern. So werden z.B. spezielle Verbrennungsverfahren, die mit Luftstufung oder Brennstoffstufung arbeiten, eingesetzt. Auch eine Verringerung der Verbrennungstemperatur durch eine Abgasrückführung resultiert in einer verminderten Stickoxidbildung. Bei Braunkohlekraftwerken können die bisher geltenden Abgasgrenzwerte für NOₓ in der Regel durch Primärmaßnahmen eingehalten werden. Bei Steinkohlekraftwerken sind dagegen bereits heute Sekundärmaßnahmen erforderlich, um den Stickoxidausstoß zu verringern. Für die Schwefeloxidentfernung sind jedoch in jedem Fall Sekundär-Maßnahmen erforderlich. Hier hat sich insbesondere der Einsatz von Rauchgasentschwefelungsanlagen (REA) bewährt, die mit alkalischen Wäschen arbeiten. Für die NOx-Entfernung haben sich in der Praxis nur die so genannte selektive nicht-katalytische Reduktion (SNCR) und die so genannte selektive katalytische Reduktion (SCR) durchgesetzt. Sollen besonders niedrige Stickoxidwerte im Abgas erreicht werden, so ist bisher die selektive katalytische Reduktion (SCR) das Verfahren der Wahl. Bei der selektiven katalytischen Reduktion wird im Allgemeinen ein Vanadium-Titanoxid-Katalysator mit einer typischen Arbeitstemperatur von 300 bis 450°C eingesetzt. Als Reduktionsmittel dienen Ammoniak oder ammoniakbildende Derivate wie z.B. Harnstoff.

Neben der katalytischen Reduktion gehören auch katalytische Oxidationen von Stickoxiden oder das Oxidieren von Stickoxiden mittels Zugabe eines Oxidationsmittels und nachfolgender bzw. simultaner wässriger Auswaschung (z.B. Walter-Simultan-Verfahren, Denox-Ammoniak-Aerosol-Verfahren) für spezielle Prozessgase zum Stand der Technik, um NOₓ -Grenzwerte einzuhalten. Das Walther-Verfahren nutzt z.B. Ozon für die Oxidation von Stickstoffmonoxid (NO) zu Stickstoffdioxid (NO₂) und eine anschließende Ammoniakwäsche zur Bildung von Ammoniumnitrit und Ammoniumnitrat. Ähnlich arbeitet auch das von BOC (Linde) entwickelte Low-TOx-Verfahren. Eine Einspeisung von NO₂ - Reichgas zum Erreichen eines äquimolaren Verhältnisses NO/ NO₂ zur besseren Auswaschung in Ammoniaklösungen ist ebenfalls vorstellbar.

Üblicherweise wird die Wäsche nach der Staubabscheidung im nahezu drucklosen Bereich durchgeführt. Entweder erfolgt eine simultane Abscheidung von SOₓ und NOₓ oder eine seriell geschaltete Abscheidung, bei der zuerst SOₓ ausgewaschen wird, danach eine vollständige oder teilweise Oxidation von NO zu NO₂ durchgeführt wird und im nächsten Schritt ausgewaschen wird.

Ein Überblick über die gängigen Verfahren zur Entstickung von Kraftwerksabgasen wurde z.B. im 40. Kraftwerkstechnischen Kollloquium 2008; "Zielkonflikt Emissionen und Energieeffizienz"; Prof. M. Beckmann, Prof. U. Gampe, S. Grahl, S. Hellfrisch; TU Dresden, Institut für Energietechnik gegeben. Das Walter-Simultan-Verfahren ist z.B. in Chemie Ingenieur Technik 57 (1985) Nr. 9, S. 717-727, beschrieben. In Chemie Ingenieur Technik 57 (1985) Nr. 3, S. 239-241, ist außerdem das Walther-Verfahren dargestellt. Das so genannte Denox-Ammoniak-Aerosol-Verfahren ist in Chemie Ingenieur Technik 62 (1990) Nr. 3, S. 1039-1041, beschrieben. Einen Überblick über Oxidationsverfahren bietet schließlich Ferell, R.J.; A review of oxidation technologies instrumental in simultaneous removal of pollutants from flue gas streams; The proceedings of the 29th International Technical Conference on Coal Utilization & Fuel Systems; 2004, 989-1000.

Zukünftige Umweltschutzgesetze werden eine weitere Reduzierung des Stickoxidgehalts in Rauchgasen von Kraftwerken vorschreiben. So ist z.B. in Deutschland für Kraftwerke, die ab dem Jahr 2013 in Betrieb gehen, ein Grenzwert von 100 mg/m³ vorgesehen. Derartig niedrige Werte lassen sich in der Praxis nur mit Sekundärmaßnahmen erreichen.

In jüngster Zeit werden neue Kraftwerkskonzepte vorgeschlagen, bei denen der fossile Brennstoff, z.B. Kohle, mit einem sauerstoffreichen Verbrennungsgas, insbesondere mit technisch reinem Sauerstoff oder mit sauerstoffangereicherter Luft, verbrannt wird (Sauerstoffbrenngasverfahren). Der Sauerstoffanteil dieses Verbrennungsgases beträgt z.B. 95 bis 99,9 Vol%. Das dabei entstehende Rauchgas enthält hauptsächlich Kohlendioxid mit einem Anteil von ca. 70 bis 85 Vol%. Ziel dieser neuen Konzepte ist es, das bei der Verbrennung der fossilen Brennstoffe entstehende und im Rauchgas konzentriert vorhandenes Kohlendioxid in geeigneten Lagerstätten, insbesondere in bestimmten Gesteinsschichten oder salzwasserführenden Schichten, zu verpressen und somit den Kohlendioxidausstoß zur Atmosphäre zu begrenzen. Dadurch soll die klimaschädliche Wirkung von Treibhausgasen wie Kohlendioxid reduziert werden. Derartige Kraftwerke werden in der Fachwelt als so genannte "Oxyfuel"-Kraftwerke bezeichnet.

Da auch die Rauchgase dieser Kraftwerke neben Kohlendioxid andere umweltschädliche Bestandteile enthalten, ist wie bei herkömmlichen Kraftwerken eine Rauchgasreinigung erforderlich, um gesetzliche Emissionsvorgaben für Abgasemissionen in die Atmosphäre bzw. Anforderungen hinsichtlich der Kohlendioxidlagerung zu erfüllen. Insbesondere sind beim Transport des kohlendioxidreichen Abgases in Rohrleitungen zu einer weiteren Nutzung oder Lagerung sowie beim Einbringen in Gesteinsformationen bestimmte Höchstgrenzen für den Schwefeldioxid- und Stickoxidgehalt zu beachten. Bei den bisher bekannten Konzepten erfolgen daher in aufeinander folgenden Schritten eine Entstaubung, Entstickung und Entschwefelung des Rauchgases. Im Anschluss an diese Rauchgasreinigung wird das so aufbereitete, kohlendioxidreiche Abgas verdichtet, um einer weiteren Nutzung oder Lagerung zugeführt zu werden. Die Entfernung der Verunreinigungen erfolgt somit auch hier im drucklosen Bereich vor der Verdichtung des Abgases.

Kohlendioxidhaltige Gasströme fallen auch bei sonstigen Großfeuerungsanlagen an, die mit fossilen Brennstoffen betrieben werden. Hierzu zählen z.B. Industrieöfen, Dampfkessel und ähnliche thermische Großanlagen zur Strom- oder Wärmeerzeugung. Es ist denkbar, dass auch solche Anlagen mit Sauerstoff oder sauerstoffangereicherter Luft betrieben werden, so dass kohlendioxidreiche Abgasströme entstehen, aus denen das Kohlendioxid abgetrennt und einer Verwertung oder Speicherung (z.B. durch Verpressung im Untergrund) zugeführt wird. In diesem Fall sind ebenfalls Höchstgrenzen für den Schwefel- und Stickoxidgehalt zu beachten.

In der EP 1 790 614 A1 ist ein Verfahren zur insbesondere gleichzeitigen Entfernung von Schwefeldioxid (SO₂) und Stickoxiden (NOₓ) von gasförmigem Kohlendioxid beschrieben, bei dem unter erhöhtem Druck in Gegenwart von molekularem Sauerstoff (O₂) und Wasser das SO₂ in Schwefelsäure und die NOₓ in Salpetersäure umgewandelt werden. Die entstehende Schwefelsäure und Salpetersäure werden vom gasförmigen Kohlendioxid abgetrennt, wobei SO₂-freies, NOₓ-armes Kohlendioxidgas hergestellt wird. Dieses Verfahren ist auch zur Reinigung von Abgasen eines nach dem Sauerstoffbrenngasverfahren arbeitenden Kraftwerks ("Oxyfuel"-Kraftwerk) vorgesehen, bei dem ein kohlendioxidreiches Rauchgas anfällt. Nachteilig bei diesem bekannten Verfahren ist, dass Säuren produziert werden, welche erhebliche Probleme bei deren Weiterverarbeitung oder Entsorgung bereiten. Insbesondere kann es zu Korrosion an produktführenden Apparaten und Leitungen kommen, was einen erhöhten Materialaufwand und/oder Betriebsbeeinträchtigungen zur Folge hat. Außerdem müssen die Säuren, die als Gemisch vorliegen, als Abprodukt behandelt werden, sofern keine aufwendige Aufbereitung zwecks Weiterverwertung möglich ist.

Aufgabe der vorliegenden Erfindung ist es, ein Verfahren der eingangs genannten Art so auszugestalten, dass auf wirtschaftliche Weise eine effektive Entfernung der Verunreinigungen aus dem Gasstrom ermöglicht wird, ohne dass dabei umweltschädliche Nebenprodukte entstehen.

Diese Aufgabe wird erfindungsgemäß dadurch gelöst, dass die Verunreinigung bei einem erhöhten Druck von mindestens 2 bar durch Reaktion mit dem im Gasstrom vorhandenen Sauerstoff und mit mindestens einem basischen Bestandteil des Waschmittels zu mindestens einem Salz umgesetzt wird, das als gelöstes Salz ausgewaschen wird.

Mit dieser Verfahrensführung ergibt sich die Möglichkeit, die Verunreinigungen, insbesondere NOₓ und SOₓ , mittels eines Wäschers zu entfernen, der in Kombination mit einem Direktkühler in einen Abgasstrang integriert werden kann.

Gegenüber den bisher angewandten Methoden zur Reinigung von Gasströmen, insbesondere von Kraftwerksabgasen, mittels alkalischen Wäschen, ergeben sich erhebliche technische und wirtschaftliche Verbesserungen. Aufgrund der Druckerhöhung läuft die Umsetzung der Verunreinigungen zu gelösten Salzen selbsständig und beschleunigt ab, so dass insgesamt die Effizienz der Abgasreinigung verbessert wird. Beispielsweise ermöglicht die Druckerhöhung eine beschleunigte Oxidation von NO zu NO₂ durch den im Gasstrom vorhandenen Sauerstoff, ohne dass zusätzliche Oxidationsmitteln zugegeben werden müssten oder eine katalytische Vorstufe zur Oxidation vorgeschaltet werden müsste. Dadurch wird schließlich die Auswaschung als Nitrit- bzw. Nitratsalz begünstigt.

Anders als beim Stand der Technik gemäß der EP 1 790 614 A1 werden beim erfindungsgemäßen Verfahren keine Säuren produziert. Die mit der Produktion von Säuren verbundenen Korrosions - und Handhabungsprobleme können daher mit der Erfindung verhindert werden. Dies wird dadurch erreicht, dass ein Waschmittel verwendet wird, welches basische Bestandteile beinhaltet. Durch Reaktion der basischen Bestandteile mit den Verunreinigungen wie NO₂ und SO₂ werden diese zu Salzen umgesetzt und als gelöste Salze ausgewaschen.

Die basischen Bestandteile können auch als Additive in gelöster bzw. ungelöster Form vor der Wäsche dem Gasstrom zugegeben werden, um das Risiko einer Korrosion durch entstehende Säuren vor der eigentlichen Entfernung der Verunreinigungen weiter zu reduzieren. Hierzu kann beispielsweise Ammoniak (NH₃) als Lösung oder gasförmig vor der Wäsche zugesetzt werden, so dass gebildete Säuren sofort in Salze umgesetzt werden.

Vorzugsweise wird ein Waschmittel verwendet, das als basischen Bestandteil mindestens Ammoniak (NH₃) und/oder Natronlauge (NaOH) enthält.

Die Wäsche ist in der Lage, SO₂ und SO₃ sowie NO_{X} simultan zu entfernen. Dabei kann die Wäsche als Feinreinigung nach herkömmlichen Entschwefelungs- und Entstickungsanwendungen erfolgen bzw. eine oder beide Anwendungen ersetzen. Zweckmäßigerweise erfolgt die Wäsche am Ende einer Reinigungskette für den Gasstrom. Demnach ist der Wäsche unter erhöhtem Druck insbesondere eine Entstaubung und Entschwefelung des Gasstroms im nahezu drucklosen Bereich vorgeschaltet. Dadurch ist der der Wäsche zugeführte Gasstrom weitgehend staubund schwefelfrel, wodurch die Wäsche gezielt auf die verbleibenden Verunreinigungen, insbesondere Stickoxide, ausgelegt werden kann. Die üblicherweise der Entschwefelung vorgeschaltete, katalytische Entstickung (z.B. SCR) kann dann entfallen und durch die nachgeschaltete, erfindungsgemäße Wäsche ersetzt werden. Das mit den Salzen beladene Waschmittel kann weiteren Anwendungen zugeführt werden. Beispielsweise kann es als Ausgangsstoff für Dünger dienen. Vorzugsweise wird zumindest ein Teil des mit dem gelösten Salz bzw. mit den gelösten Salzen beladenen Waschmittels in eine deponierbare Form umgesetzt und/oder regeneriert. Im Falle der Regenerierung kann Ammoniumnitrit zu N₂ und H₂O thermisch und oder katalytisch zersetzt werden.

Besondere Vorteile ergeben sich bei einer Anwendung der Erfindung auf Großfeuerungsanlagen, insbesondere Kraftwerke, die nach dem Sauerstoffbrenngasverfahren arbeiten (so genannte "Oxyfuel"-Anlagen). Bei solchen Anlagen ist bereits eine Verdichtung des kohlendioxidreichen Abgases vorgesehen, um dieses einer Nutzung oder Lagerung zuführen zu können. Diese Abgasverdichtung kann auf technisch elegante Weise zum Zwecke der Erfindung genutzt werden. Demnach erfolgt die Wäsche des Abgases im Bereich dieser Abgasverdichtung bei erhöhtem Druck. Bei dieser besonders bevorzugten Variante der Erfindung wird also der verdichtete Abgasstrom von einem kohlendioxidreichen Abgasstrom einer Großfeuerungsanlage, insbesondere eines Kraftwerks, gebildet, wobei in der Großfeuerungsanlage fossile Brennstoffe mit einem Verbrennungsgas verbrannt werden, das einen höheren Sauerstoffanteil als Luft aufweist.

In diesem Fall ist es zweckmäßig, einen Teil des kohlendioxidreichen Gasstroms vor der Verdichtung des Gasstroms zur Verbrennung zurückzuführen. Dies bewirkt einerseits aufgrund der Senkung der Verbrennungstemperatur eine Verminderung der Stickoxidbildung bei der Verbrennung. Andererseits wird der der Wäsche zugeführte Gasvolumenstrom verkleinert, was die Auslegung der Wäsche erleichtert. Dabei kann die Gasrückführung vor oder nach einer Rauchgasentschwefelungseinheit (REA) erfolgen, welche vorzugsweise der Verdichtung des Gasstroms vorgeschaltet ist.

Nach der Wäsche kann der verdichtete, kohlendioxidreiche und weitgehend von Verunreinigungen befreite Gasstrom einer Nutzung und/oder Speicherung zugeführt werden. Hierzu kann er beispielsweise über Rohrleitungen zu einem Einsatzort transportiert und dort in Gesteinsschichten des Untergrunds oder in salzwasserführende Schichten verpresst werden, ohne dass die Gefahr einer Korrosion der Rohrleitungen oder einer negativen Beeinflussung von Gesteinsformationen durch die Einwirkung von Stickoxiden besteht.

Die Wäsche wird bevorzugt bei einem Druck zwischen 10 und 60 bar, besonders bevorzugt zwischen 20 und 40 bar angewandt.

Außerdem erfolgt die Wäsche vorteilhafterweise bei einer Temperatur im Bereich von 10 bis 120°C, besonders bevorzugt im Bereich von 10 bis 35°C.

Der Gasstrom weist vorzugsweise einen Sauerstoffgehalt in einem Bereich von 2 bis 20 Vol%, insbesondere von 3 bis 6 Vol%, auf.

Vor der Wäsche kann bereits eine Oxidation von NO zu NO₂ in der Gasphase durchgeführt werden. Hierzu kann durch konstruktive Maßnahmen die notwendige Verweilzeit geschaffen werden. Zur Beschleunigung der Reaktion von NO zu NO₂ kann auch ein Katalysator eingesetzt werden. Außerdem kann durch Einspeisung eines Additivs eine Umsetzung von NO₂ zu Nitrit bzw. Nitrat durchgeführt werden.

Eine besonders bevorzugte Ausgestaltung der Erfindung sieht vor, dass dem Waschmittel mindestens eine Substanz zugegeben wird, die durch Oberflächenvergrößerung den Stoffaustausch fördert. Beispielsweise können hierfür Kohlepartikel eingesetzt werden. Vorzugsweise werden solche Substanzen verwendet, die als Katalysator oder als Träger für einen Katalysator dienen. Dadurch können insbesondere die ablaufenden Oxidationsschritte katalysiert werden.

Der Gasstrom wird zweckmäßigerweise mittels Kühlwasser oder Kaltwasser aus einer Kälteanlage gekühlt. Dabei wird mit Vorteil ein Wäscher verwendet, der strukturierte Packungen, Böden oder Füllkörper aufweist. Außerdem umfasst der Wäscher vorzugsweise mehrere Kolonnenbetten mit Wiederverteilung. Besonders bevorzugt wird das unterste Kolonnenbett zwecks Temperaturabbau des kohlendioxidreichen Gasstroms als Wasserquench betrieben. Dabei wird Überschusswasser, insbesondere Kondensat aus dem kohlendioxidreichen Gasstrom, an die darüber liegende basische Wäsche abgegeben.

Gemäß einer Weiterbildung des Erfindungsgedankens wird die Wäsche nicht in dem zur weiteren Nutzung oder Lagerung vorgesehenen, verdichteten, kohlendioxidreichen Gasstrom durchgeführt, sondern in einem von diesem nach der Verdichtung abgezweigten Gasstrom mit vermindertem Kohlendioxidgehalt. Dieser zur Abgabe an die Atmosphäre vorgesehene Gasstrom wird in Fachkreisen als "Vent"-Gas bezeichnet. Bei dieser Variante ist der Verdichtung eine insbesondere kryogene Reinigungsstufe nachgeschaltet, in der die Gasbestandteile, die z.B. nicht verpresst werden können, abgetrennt werden. Auf diese Weise entsteht ein Gasstrom mit erhöhtem Kohlendioxidgehalt, der der weiteren Nutzung oder Lagerung zugeführt wird, und ein abgetrennter Gasstrom mit vermindertem Kohlendioxidgehalt, der an die Atmosphäre abgegeben wird. Der letztgenannte Gasstrom weist einen erhöhten Stickoxidanteil auf, so dass er vor der Abgabe an die Atmosphäre gereinigt werden muss. Da der Gasstrom bereits verdichtet ist, wird bei dieser Verfahrensvariante die Wäsche bevorzugt in diesem abgezweigten Gasstrom durchgeführt.

Bei dieser Ausführungsform ergibt sich als besonderer Vorteil, dass die Stickoxide im kleinsten Gasstrom vor der Emissionsstelle auf einen zulässigen Grenzwert begrenzt werden. Die in diesem Gasstrom vorhandenen hohen Konzentrationen und der hohe Sauerstoffgehalt (z.B. 15 Vol%) begünstigen die Reaktion von NO zu NO₂. Aufgrund des sauberen Gasstroms entsteht ein nahezu reines Produkt, das weiter verwertet werden kann. Von Vorteil ist darüber hinaus, dass der Gasstrom bereits kalt aus der kryogenen Reinigung mit partieller Kondensation, Abscheidung und Rückverdampfung kommt.

Generell bietet die Erfindung eine ganze Reihe von weiteren Vorteilen:

Aufgrund der Verdichtung des Gasstroms und gegebenenfalls der Rückführung eines Teils des Gasstroms zum Kraftwerk ist der zur Wäsche führende Volumenstrom verringert, wodurch eine geringere Baugröße der Apparate ermöglicht wird. Außerdem kann die Wäsche in eine bereits vorhandene Direktkühlung integriert werden.

Schließlich ergibt sich noch ein wesentlicher Vorteil der Erfindung dadurch, dass nur Salze, insbesondere Nitrite/Nitrate und Sulfite/Sulfate, entstehen, die weiter verwertet werden können (z.B. in der Düngemittelindustrie). Daher treten keine Entsorgungsprobleme auf. Dabei ergeben sich im Falle einer der Druckwäsche vorgeschalteten Rauchgasentschwefelungswäsche verbesserte Vermarktungschancen, da wenig Verunreinigungen in den ausgewaschenen Salzen zu erwarten sind. Es fällt ein definiertes Produkt an, das nahezu frei von Sulfat, Chloriden, Quecksilber und Staub ist.

Als alternative Ausgestaltung ergibt sich die Möglichkeit gebildete Nitritsalze abzubauen. Hierzu wird Ammoniumnitrit thermisch bzw. katalytisch in N₂ und H₂O zersetzt. Bevorzugt erfolgt die Regenerierung bei 30°C-120°C, insbesondere bevorzugt bei 50°C-80°C. Damit ist die Option gegeben bei Bedarf ein System ohne zusätzliche Auslassströme und damit eine Marktunabhängigkeit zu etablieren.

Gegenüber dem aus der EP 1 790 614 A1 bekannten Verfahren ergeben sich aufgrund des erfindungsgemäßen Betriebs der Druckwäsche mit basischen Waschmittelbestandteilen insbesondere hinsichtlich folgender Kriterien erhebliche Verbesserungen:

### 1. Korrosionsproblematik:

Beim bekannten Verfahren entsteht im ersten Wäscher ein Säuregemisch, welches hohe Ansprüche an das verwendete Material stellt. Beispielsweise muss eine Verbleiung oder eine Beschichtung mit Kunststoff vorgesehen werden. Durch den erfindungsgemäßen Einsatz von basischen Waschmittelbestandteilen werden anstelle von korrosiv wirkenden Säuren herkömmliche Anlagenteile nicht angreifende Salze bzw. Salzlösungen gebildet, deren pH gesteuert werden kann. Daher kann auf günstigere Materialien zurückgegriffen werden

### 2. NOₓ- Auswaschrate:

Das bekannte Verfahren benutzt Wasser als Waschmedium, wobei NO zu wasserlöslichem NO₂ vollständig aufoxidiert werden muss und das NO, das beim Zerfall der salpetrigen Säure entsteht, wiederum oxidiert werden muss. Um niedrige NOₓ -Werte am Wäscheraustritt zu erreichen, sind entsprechende Verweilzeiten für eine kontinuierliche Oxidation des NO sowie eine Re-Oxidation des freigesetzten NO nötig. Dieser Effekt wird beim erfindungsgemäßen Verfahren aufgrund der basischen Waschmittelbestandteile kompensiert, da die salpetrige Säure als wasserlösliches Nitrit abgefangen werden kann. Im Folgenden soll dieser Zusammenhang anhand eines Vergleichs der Reaktionsgleichungen der ablaufenden Reaktionen verdeutlicht werden:

### Bekanntes Verfahren:

| | |
|---|---|
| NO + ½ O₂ → NO₂ | NO-Oxidation |
| 2NO₂ ←→ N₂O₄ | NO₂-Folgereaktionen |
| N₂O4+H₂O → HNO₃ + HNO₂ | NOx-Absorption |
| 3HNO₂ → HNO₃ + 2NO + H₂O | HN02-Zersetzung |
| **3NO2+H2O → 2HNO₃ + NO** | **Nettogleichung** |

Erfindungsgemäßes Verfahren (Beispiel: NaOH als Waschmittelbestandteil): HNO₃+HNO₂+2NaOH → NaNO₃+NaNO₂+2H₂O Abfangen der salpetrigen Säure bzw.2NO₂+2NaOH → NaNO₃+NaNO₂+H₂O

Erfindungsgemäßes Verfahren (Beispiel: NH₃ als Waschmittelbestandteil):

| | |
|---|---|
| HNO₃+HNO₂+2NH₃ → NH₄NO₃+NH₄NO₂ | Abfangen der salpetrigen Säure |
| bzw. 2NO₂+2NH₃+H₂O → NH₄NO₃ + NH₄NO₂ | |

Bei der erfindungsgemäßen Verwendung von alkalischen Waschmedien wird die salpetrige Säure vor ihrem Zerfall abgefangen und in ein wasserlösliches Nitritsalz umgesetzt. Dies verkürzt die benötigte Verweilzeit im Wäscher.

### 3. Baugröße:

Da nur das NO₂ mittels Wasser ausgewaschen werden kann, ist beim bekannten Verfahren die Größe des Wäschers von der Geschwindigkeit der NO - Oxidation und dem zu erreichenden NOₓ-Gehalt abhängig.

Bei der erfindungsgemäßen Verwendung von alkalischen Waschmedien ist dagegen eine vollständige Aufoxidierung zum wasserlöslichen NO₂ nicht nötig. Es reicht ein äquimolares Verhältnis von NO und NO₂, um NOₓ in eine wässrige Lösung als Nitrit auszuwaschen. Dieser Effekt verringert nochmals die Verweilzeit und verkleinert die Bauweise des Wäschers. Die folgenden Reaktionsgleichungen verdeutlichen diesen Zusammenhang:

Erfindungsgemäßes Verfahren (Beispiel: NaOH als Waschmittelbestandteil):

| | |
|---|---|
| NO+½ O₂ → NO₂ | NO-Oxidation |
| NO₂ + NO + 2NaOH → 2NaNO₂ + H₂O | NOₓ-Absorption |
| **2NO + ½O₂ + 2NaOH → 2NaNO₂ + H₂O** | **Nettogleichung** |

Erfindungsgemäßes Verfahren (Beispiel: NH₃ als Waschmittelbestandteil):

| | |
|---|---|
| NO+½O₂ → NO₂ | NO-Oxidation |
| NO₂+NO+2NH₃+H₂O ←→ 2NH₄NO₂ | NOₓ-Absorption |
| **2NO+½O₂+2NH₃+H₂O→ 2NH₄NO₂** | **Nettogleichung** |

### 4. Katalysatoren und Oxidationsmittel:

Die erfindungsgemäße Druckwäsche mit basischen Waschmittelbestandteilen hat zusätzliche Vorteile gegenüber anderen Prozessen. In der Regel wird beim Auswaschen von Schadstoffen mittels Wäscher ein Oxidationsmittel hinzugegeben oder ein vorheriger Schritt zur teilweisen oder vollständigen Oxidation mittels Katalysator, Oxidationsmitteln oder Radikalbildnern vorgeschaltet, um Schadstoffe in eine wasserlösliche Form umzusetzen.

Bei einer mit basischen Bestandteilen betriebenen Druckwäsche entfallen Katalysatoren bzw. Oxidationsmittel vollständig, da die NO- Oxidation mittels vorhandenem Sauerstoff unter Druck selbstständig und beschleunigt parallel zur Auswaschung als Nitrit bzw. Nitrat erfolgt.

### 5. Simultane SO₂ und NOₓ-Entfernung:

Die EP 1 790 614 A1 beschreibt hauptsächlich neben der alleinigen Auswaschung von NOₓ die simultane Beseitigung von SO₂ und NOₓ. In diesem Fall wirkt das NO₂ als Katalysator zur SO₂-Oxidation. Erst nach vollständiger Oxidation der Schwefeloxide und dessen Auswaschung als Säure kann die NO-Oxidation einsetzen, um NO₂ als Säure auszuwaschen. Es entsteht ein Gemisch aus verschiedenen Säuren.

Bei der Verwendung von basischen Waschmittelbestandteilen ist eine komplette Oxidation des SO₂ nicht mehr nötig, da es im Beispiel von Ammoniak als Ammoniumbisulfit ausgewaschen wird. Somit kann die Verweilzeit auch in diesem Fall verkürzt werden. Es entsteht ein Gemisch aus in Wasser gelösten Salzen. Dieser Sachverhalt wird anhand folgender Reaktionsgleichungen erläutert:

Bekanntes Verfahren (Oxidation des SO₂):

| | |
|---|---|
| NO+ ½O₂ → NO₂ | NO-Oxidation |
| SO₂ + NO₂ → SO₃ + NO | SO₂-Oxidation / NO₂-Reduktion |
| SO₃+H₂O → H₂SO₄ | SO₃-Absorption |

Erfindungsgemäßes Verfahren (Beispiel: Ammoniak als Waschmittelbestandteil)

| | |
|---|---|
| NH₃ + SO₂+ H₂O → | NH₄HSO₃ |
| NH₄HSO₃+ NH₃ -7 → | (NH₄)₂SO₃ |
| (NH₄)₂SO₃+½O₂ → | (NH₄)₂SO₄ |

Erfindungsgemäßes Verfahren (Beispiel: NaOH als Waschmittelbestandteil)

| | |
|---|---|
| 2NaOH +SO₂ → | Na₂SO₃ + H₂O |
| Na₂SO₃+½ O₂ → | Na₂SO₄ |

Zusätzlich fällt bei der Verwendung eines basischen Additivs (z.B. NH₃) ein Gemisch aus Ammoniumsulf(at/it) und -nitr(at/it) an. Dieses Gemisch kann mit geringem Aufwand komplett aufoxidiert und als Mischdünger eingesetzt werden. Bei dem aus der EP 1 790 614 A1 bekannten Verfahren fällt bei der simultanen Entfernung von Schadstoffen dagegen ein Säuregemisch an, das für eine Vermarktung eine Trennung und Aufkonzentrierung der einzelnen Säuren voraussetzt.

Die Erfindung eignet sich für alle denkbaren Großfeuerungsanlagen, bei denen kohlendioxidhaltige Gasströme anfallen. Hierzu zählen z.B. mit fossilen Brennstoffen betriebene Kraftwerke, Industrieöfen, Dampfkessel und ähnliche thermische Großanlagen zur Strom- und/oder Wärmeerzeugung. Mit besonderem Vorteil kann die Erfindung bei Großfeuerungsanlagen eingesetzt werden, die mit technisch reinem Sauerstoff oder sauerstoffangereicherter Luft als Brenngas versorgt werden und bei denen demzufolge Abgasströme mit hohen Kohlendioxidkonzentrationen anfallen. Insbesondere eignet sich die Erfindung für so genannte CO₂-arme Kohlekraftwerke, die mit Sauerstoff als Brenngas betrieben werden ("Oxyfuel"-Kraftwerke) und bei denen das im Abgas in hoher Konzentration enthaltene Kohlendioxid abgetrennt und im Untergrund verpresst wird ("CO₂-Capture-Technology").

Im Folgenden soll die Erfindung anhand von in den Figuren schematisch dargestellten Ausführungsbeispielen näher erläutert werden:

Es zeigen
- Figur 1: einen Vergleich von Blockschaltbildern einer Rauchgasreinigung nach dem Stand der Technik (A) mit zwei Varianten der Erfindung (B und C)
- Figur 2: eine Detailansicht einer Rauchgasreinigung mit Druckwäsche im verdichteten Abgasstrom

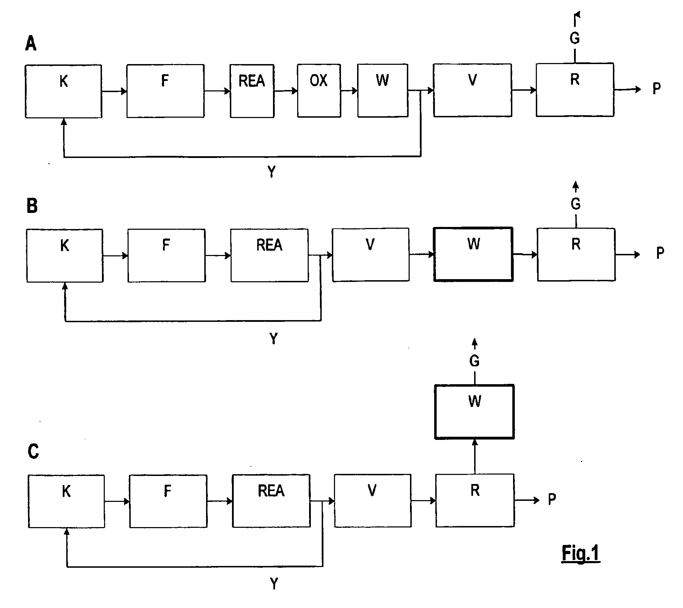

In Figur 1 ist als Ausführung A eine Rauchgasreinigung nach dem Stand der Technik dargestellt. Dabei wird das Abgas (Rauchgas) eines Verbrennungskessels K eines Kohlekraftwerks zunächst einer Entstaubung mittels einer Filtereinheit F zugeführt. Anschließend erfolgt eine Entschwefelung in einer Entschwefelungseinheit REA (z.B. in einer Wäsche). Der Entschwefelungseinheit REA ist eine Stickoxid-Oxidationseinheit OX nachgeschaltet, in der die Stickoxide z.B. mittels eines Katalysators oder durch Zugabe eines Oxidationsmittels oxidiert werden. Daraufhin erfolgt eine Auswaschung der Stickoxide in einem Wäscher W. Je nach Verfahren, kann die Oxidationseinheit mit dem Wäscher kombiniert werden und sowohl eine simultane Entschwefelung als auch Enstickung erfolgen. Ein Teil des gereinigten Abgases wird über Rücklaufleitung Y zum Verbrennungskessel K des Kraftwerks zurückgeführt.

Im vorliegenden Beispiel soll es sich um ein nach dem Sauerstoffbrenngasverfahren arbeitendes Kraftwerk (sog. "Oxyfuel"-Kraftwerk) handeln. Dabei wird die Kohle mit technisch reinem Sauerstoff (Sauerstoffgehalt im Brenngas >95 Vol%) verbrannt. Das kohlendioxidreiche Abgas dieser Verbrennung soll zu einem Großteil in Gesteinsschichten des Untergrunds verpresst werden, um die Kohlendioxidemissionen an die Atmosphäre und die damit verbundenen klimaschädlichen Wirkungen (Treibhauseffekt) zu verringern. Hierzu wird das in den oben beschriebenen Reinigungsschritten aufbereitete Abgas mittels eines Verdichters V komprimiert und zunächst einer kryogenen Reinigung R zugeführt, in der die nicht verpressbaren Bestandteile abgetrennt und als Gasstrom G ("Vent"-Gas) abgezogen werden. Der verbleibende kohlendioxidreiche Abgasstrom wird schließlich z.B. über Rohrleitungen und Zwischenspeicherbehälter zur Verpressung P geleitet.

Bei dieser herkömmlichen Rauchgasreinigung erfolgt somit die Schadstoffentfernung im nahezu drucklosen Bereich vor der Abgasverdichtung.

In Ausführung B ist zum Vergleich eine Rauchgasreinigung nach der Erfindung gezeigt, bei der eine basische Druckwäsche im Abgasstrom nach der Verdichtung V erfolgt. Dabei wird wie bei der Ausführung A von einem Kraftwerk ausgegangen, das nach dem Sauerstoffbrenngasverfahren arbeitet ("Oxyfuel"-Kraftwerk). Das im Verbrennungskessel K anfallende, kohlendioxidreiche Abgas wird analog zur Ausführung A zunächst in einer Filtereinrichtung F entstaubt und anschließend einer Rauchgasentschwefelung REA unterzogen. Ein Teil des so aufbereiteten Abgases wird zum Verbrennungskessel K zur Senkung der Verbrennungstemperatur und somit zur Verminderung der Stickoxidbildung über die Rückführleitung Y zurückgeleitet. Der Abgasstrom wird einem Verdichter V zugeführt. Der komprimierte Abgasstrom wird zur basischen Druckwäsche einer Wascheinheit W zugeleitet. Das von Stickoxiden weitgehend befreite Abgas wird dann in einer kryogenen Reinigungsstufe R in einen Gasstrom G, der die nicht verpressbaren Bestandteile enthält und einen kohlendioxidreichen und weitgehend stickoxidfreien Abgasstrom, der für die Verpressung P vorgesehen ist, aufgeteilt. Im Gegensatz zur herkömmlichen Rauchgasreinigung gemäß der Ausführung A erfolgt somit anstelle der Entstickung im nahezu drucklosen Bereich eine basische Wäsche W bei einem erhöhten Druck nach der Kompression des Abgasstroms im Verdichter V.

In Ausführung C ist eine Variante der Erfindung gezeigt, bei der die basische Druckwäsche W im abgezweigten Gasstrom G ("Vent-Gas) erfolgt. Diese Variante unterscheidet sich von der Ausführung B dadurch, dass der im Verdichter V komprimierte Abgasstrom nicht unmittelbar der Druckwäsche W zugeführt wird, sondern zunächst in der kryogenen Reinigung R aufbereitet wird. Dabei werden die nicht verpressbaren Bestandteile vom Abgasstrom abgetrennt. Der abgetrennte Gasstrom G enthält einen verminderten Anteil an Kohlendioxid und einen erhöhten Anteil an Stickoxiden. Zur weitgehenden Entfernung der Stickoxide aus dem zur Abgabe an die Atmosphäre vorgesehenen Gasstrom G werden die Stickoxide in der Druckwäsche W in gelöste Salze umgesetzt und ausgewaschen. Der so gereinigte Gasstrom G kann anschließend an die Umgebung abgelassen werden. Der verbleibende Abgasstrom mit erhöhtem Kohlendioxidgehalt wird der Verpressung P zugeführt.

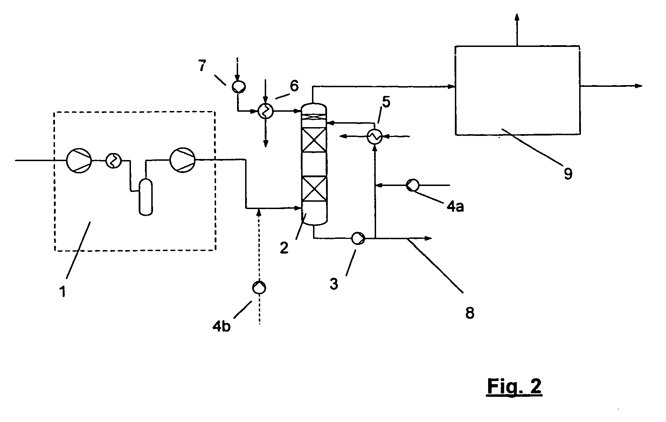

In Figur 2 ist eine Detailansicht der Verdichtung und Wäsche des Abgasstroms gezeigt. Dabei entspricht die Anordnung der im Blockschaltbild von Figur 1 gezeigten Ausführung B. Das in der nicht dargestellten Entstaubung und Entschwefelung vorgereinigte, kohlendioxidreiche Rauchgas wird im vorliegenden Ausführungsbeispiel in einem Verdichter 1 mit Zwischenkühlung auf den gewünschten Druck von 20 bis 40 bar komprimiert. Vorhandenes NO wird durch den erhöhten Druck, genügender Verweilzeit und unter Anwesenheit von Sauerstoff zu NO₂ reagieren. Das CO₂ -Rohgas wird nach der letzten Kompressorstufe im Wäscher 2 gequencht. Um das Material der Apparate vor auskondensierten Säuren zu schützen, kann gegebenenfalls das basische Additiv nach den Kompressorstufen über eine Leitung 4b eingespeist werden. Im Wäscher 2 wird im Gegenstrom das Gas gegen das Waschmedium gefahren. Das Waschmedium wird in einem Rücklauf 3 auf das oberste Bett gegeben. In diesen Rücklauf wird das basische Additiv über eine Leitung 4a eingespeist. Über die Kühler 5 und 6 wird die Temperatur über dem Wäscher 2 eingestellt. Die Waschkolonne enthält als oberstes Bett eine zusätzliche Wasserwäsche 7 und Demister zur Rückhaltung von Mitriss. Eine Salzlösung wird kontinuierlich über Leitung 8 abgezogen. Der gereinigte CO₂ -Strom wird dann der nachfolgenden Trocknung, der kryogenen Reinigung 9 (partiellen Kondensation und Rückverdampfung) und einer weiteren Verdichtung zugeführt. Die Stickoxid- und Schwefeldioxidkonzentrationen im "Vent"-Gas und im CO₂ -Produktstrom entsprechen den zulässigen und geforderten Konzentrationen.

## Patentansprüche

1. Verfahren zur Entfernung von zumindest einem Teil mindestens einer Verunreinigung, die insbesondere eine chemische Verbindung aus der Gruppe der Schwefeloxide (SOₓ) und /oder Stickoxide (NOₓ) umfasst, aus einem Sauerstoff enthaltenden Gasstrom durch Auswaschen mit mindestens einem Waschmittel, **dadurch gekennzeichnet, dass** die Verunreinigung bei einem erhöhten Druck von mindestens 2 bar durch Reaktion mit dem im Gasstrom vorhandenen Sauerstoff und mindestens einem basischen Bestandteil des Waschmittels zu mindestens einem Salz umgesetzt wird, das als gelöstes Salz ausgewaschen wird.

2. Verfahren nach Anspruch 1, **dadurch gekennzeichnet, dass** der Gasstrom von einem kohlendioxidreichen Abgasstrom einer Großfeuerungsanlage, insbesondere eines Kraftwerks, gebildet wird und in der Großfeuerungsanlage fossile Brennstoffe mit einem Verbrennungsgas verbrannt werden, das einen höheren Sauerstoffanteil als Luft aufweist.

3. Verfahren nach Anspruch 2, **dadurch gekennzeichnet, dass** ein Teil des kohlendioxidreichen Gasstroms vor der Verdichtung des Gasstroms zur Verbrennung zurückgeführt wird.

4. Verfahren nach Anspruch 2 oder 3, **dadurch gekennzeichnet, dass** der verdichtete kohlendioxidreiche Gasstrom nach der Wäsche einer Nutzung oder Speicherung zugeführt wird.

5. Verfahren nach einem der Ansprüche 1 bis 4, **dadurch gekennzeichnet, dass** ein Waschmittel verwendet wird, das als basischen Bestandteil mindestens Ammoniak (NH₃) und/oder Natronlauge (NaOH) enthält.

6. Verfahren nach einem der Ansprüche 1 bis 5, **dadurch gekennzeichnet, dass** zumindest ein Teil des mit dem gelösten Salz beladenen Waschmittels in eine deponierbare Form umgesetzt und/oder regeneriert wird.

7. Verfahren nach einem der Ansprüche 1 bis 6, **dadurch gekennzeichnet, dass** die Wäsche bei einem Druck zwischen 10 und 60 bar, insbesondere zwischen 20 und 40 bar, durchgeführt wird.

8. Verfahren nach einem der Ansprüche 1 bis 7, **dadurch gekennzeichnet, dass** die Wäsche bei einer Temperatur von 10 bis 120°C, insbesondere 10 bis 35°C, durchgeführt wird.

9. Verfahren nach einem der Ansprüche 1 bis 8, **dadurch gekennzeichnet, dass** der Gasstrom einen Sauerstoffgehalt in einem Bereich von 2 bis 20 Vol%, insbesondere 3 bis 6 Vol%, aufweist.

10. Verfahren nach einem der Ansprüche 1 bis 9, **dadurch gekennzeichnet, dass** vor der Wäsche eine Oxidation von NO zu NO₂ und durch Einspeisung eines Additivs die Umsetzung zu Nitrit bzw. Nitrat durchgeführt wird..

11. Verfahren nach einem der Ansprüche 1 bis 10, **dadurch gekennzeichnet, dass** dem Waschmittel mindestens eine Substanz zugegeben wird, die durch Oberflächenvergrößerung den Stoffaustauch fördert.

12. Verfahren nach Anspruch 11, **dadurch gekennzeichnet, dass** eine Substanz zugegeben wird, die als Katalysator oder als Träger für einen Katalysator dient.

13. Verfahren nach einem der Ansprüche 2 bis 12, **dadurch gekennzeichnet, dass** der verdichtete kohlendioxidreiche Gasstrom einer Reinigungsstufe zugeführt wird, von der ein Gasstrom mit erhöhtem Kohlendioxidgehalt abgezogen wird, welcher der Nutzung oder Speicherung zugeführt wird, und ein Gasstrom mit verringertem Kohlendioxidgehalt abgezogen wird, welcher an die Atmosphäre abgegeben wird, wobei die Wäsche in dem Gasstrom mit verringertem Kohlendioxidgehalt durchgeführt wird.

## Claims

1. Process for removing at least a part of at least one impurity which comprises in particular a chemical compound from the group consisting of the oxides of sulphur (SOₓ) and/or oxides of nitrogen (NOₓ) from an oxygen-containing gas stream by scrubbing with at least one washing agent, **characterized in that** the impurity is converted at an elevated pressure of at least 2 bar by reaction with the oxygen present in the gas stream and at least one basic constituent of the washing agent into at least one salt, which is washed out as dissolved salt.

2. Process according to Claim 1, **characterized in that** the gas stream is formed from a carbon dioxide-rich waste gas stream of a large furnace, in particular of a power station, and, in the large furnace, fossil fuels are burned with a combustion gas which has a higher proportion of oxygen than air.

3. Process according to Claim 2∼ **characterized in that** a part of the carbon dioxide-rich gas stream is recycled before the compression of the gas stream for combustion.

4. Process according to Claim 2 or 3, **characterized in that** the compressed carbon dioxide-rich gas stream is sent for utilization or storage after the scrubbing.

5. Process according to any of Claims 1 to 4, **characterized in that** a washing agent which contains at least ammonia (NH₃) and/or sodium hydroxide (NaOH) as the basic constituent is used.

6. Process according to any of Claims 1 to 5, **characterized in that** at least a part of the washing agent laden with the dissolved salt is converted into a form which can be disposed of on a landfill and/or is regenerated.

7. Process according to any of Claims 1 to 6, **characterized in that** the scrubbing is carried out at a pressure between 10 and 60 bar, in particular between 20 and 40 bar.

8. Process according to any of Claims 1 to 7, **characterized in that** the scrubbing is carried out at a temperature of 10 to 120°C, in particular 10 to 35°C.

9. Process according to any of Claims 1 to 8, **characterized in that** the gas stream has an oxygen content in a range from 2 to 20% by volume, in particular 3 to 6% by volume.

10. Process according to any of Claims 1 to 9, **characterized in that** an oxidation of NO to NO₂ and, by feeding in an additive, the conversion into nitrite or nitrate are carried out before the scrubbing.

11. Process according to any of Claims 1 to 10, **characterized in that** at least one substance which promotes mass transfer by increasing the surface area is added to the washing agent.

12. Process according to Claim 11, **characterized in that** a substance which serves as a catalyst or as a support for a catalyst is added.

13. Process according to any of Claims 2 to 12, **characterized in that** the compressed carbon dioxide-rich gas stream is fed to a purification stage, from which a gas stream having an increased carbon dioxide content is taken off and is sent for utilization or storage, and a gas stream having a reduced carbon dioxide content is taken off and is released into the atmosphere, the scrubbing being carried out in the gas stream having a reduced carbon dioxide content.

## Revendications

1. Procédé d'élimination d'au moins une partie d'au moins une impureté, qui comprend notamment un composé chimique du groupe des oxydes de soufre (SOₓ) et/ou des oxydes d'azote (NOₓ), d'un courant gazeux contenant de l'oxygène par lavage avec au moins un agent de lavage, **caractérisé en ce que** l'impureté est transformée à une pression élevée d'au moins 2 bar par réaction avec l'oxygène présent dans le courant gazeux et au moins un constituant basique de l'agent de lavage en au moins un sel, qui est éliminé par lavage sous la forme d'un sel dissous.

2. Procédé selon la revendication 1, **caractérisé en ce que** le courant gazeux est formé par un courant de gaz d'échappement riche en dioxyde de carbone d'une installation de combustion de grande taille, notamment d'une centrale électrique, et des combustibles fossiles sont brûlés dans l'installation de combustion de grande taille avec un gaz de combustion qui présente une proportion d'oxygène plus élevée que l'air.

3. Procédé selon la revendication 2, **caractérisé en ce qu'**une partie du courant gazeux riche en dioxyde de carbone est recyclée dans la combustion avant la compression du courant gazeux.

4. Procédé selon la revendication 2 ou 3, **caractérisé en ce que** le courant gazeux riche en dioxyde de carbone comprimé est introduit après le lavage dans une utilisation ou un stockage.

5. Procédé selon l'une quelconque des revendications 1 à 4, **caractérisé en ce qu'**un agent de lavage contenant au moins de l'ammoniac (NH₃) et/ou de la soude (NaOH) en tant que constituant basique est utilisé.

6. Procédé selon l'une quelconque des revendications 1 à 5, **caractérisé en ce qu'**au moins une partie de l'agent de lavage chargé avec le sel dissous est transformée en une forme pouvant être placée dans une décharge et/ou régénérée.

7. Procédé selon l'une quelconque des revendications 1 à 6, **caractérisé en ce que** le lavage est réalisé à une pression comprise entre 10 et 60 bar, notamment entre 20 et 40 bar.

8. Procédé selon l'une quelconque des revendications 1 à 7, **caractérisé en ce que** le lavage est réalisé à une température de 10 à 120°C, notamment de 10 à 35 °C.

9. Procédé selon l'une quelconque des revendications 1 à 8, **caractérisé en ce que** le courant gazeux présente une teneur en oxygène dans une plage allant de 2 à 20 % en volume, notamment de 3 à 6 % en volume.

10. Procédé selon l'une quelconque des revendications 1 à 9, **caractérisé en ce qu'**une oxydation de NO en NO₂ et, par introduction d'un additif, la transformation en nitrite ou nitrate sont réalisées avant le lavage.

11. Procédé selon l'une quelconque des revendications 1 à 10, **caractérisé en ce qu'**au moins une substance qui favorise l'échange de matières par agrandissement des surfaces est ajoutée à l'agent de lavage.

12. Procédé selon la revendication 11, **caractérisé en ce qu'**une substance qui sert de catalyseur ou de support pour un catalyseur est ajoutée.

13. Procédé selon l'une quelconque des revendications 2 à 12, **caractérisé en ce que** le courant gazeux riche en dioxyde de carbone comprimé est introduit dans une étape de nettoyage, à partir de laquelle un courant gazeux à teneur augmentée en dioxyde de carbone est soutiré, qui est introduit dans l'utilisation ou le stockage, et un courant gazeux à teneur réduite en dioxyde de carbone est soutiré, qui est libéré dans l'atmosphère, le lavage étant réalisé dans le courant gazeux à teneur réduite en dioxyde de carbone.
